# EUROPÄISCHE PATENTSCHRIFT

(11) **EP 0 243 732 B1**
(45) Veröffentlichungstag und Bekanntmachung des Hinweises auf die Patenterteilung: **15.09.1993**
(21) Anmeldenummer: 87104990.4
(22) Anmeldetag: 03.04.1987
(51) Int. Cl.: B02C 18/18, B26D 1/00

(54) **Messerleiste für Granuliervorrichtung**
Counter cutter for a granulator
Contre-couteaux pour dispositif à granuler

(30) Priorität: 03.04.1986 DE 3611179
(43) Veröffentlichungstag der Anmeldung: 04.11.1987
(73) Patentinhaber: Rieter Automatik GmbH, D-63757 Grossostheim (DE)
(72) Erfinder: Müller, Leo, D-8751 Bessenbach 2 (DE); Bertsch, D-6800 Mannheim 71 (DE)
(74) Vertreter: Bardehle, Heinz, Dipl.-Ing.

(56) Entgegenhaltungen:
- DE-A- 2 259 315
- DE-A- 3 108 954
- GB-A- 922 341
- US-A- 2 193 148
- US-A- 2 857 111
- US-A- 4 204 451
- US-A- 4 219 291

## Beschreibung

Die Erfindung bezieht sich auf eine Messerleiste zum Zusammenwirken mit einem an ihr vorbeibewegten Schneidmesser, insbesondere zum Granulieren von Kunststoffsträngen, bestehend aus einzelnen aneinandergereihten, gleichartigen Abschnitten, wobei jeder Abschnitt derart ausgebildet ist, daß er sich über die Bereiche der Zufuhr und der Ableitung des zu schneidenden bzw. geschnittenen Materials erstreckt und wobei die Abschnitte auf Tragbalken befestigt sind und eine durchgehende Schneidkante aus einem verschleißfesten Schneidwerkstoff bilden.

Eine derartige Messerleiste ist aus der DE-OS 31 08 954 bekannt. Bei dieser Messerleiste sind die einzelnen Abschnitte jeweils mit einer Schneidkante aus polykristallinem Diamantmaterial versehen, die in einer Hartmetallaufnahme befestigt ist, die ihrerseits in einem Abschnitt ruht, der in mehrfacher Abordnung nebeneinander von einem Tragbalken getragen wird, so daS sich eine über den Tragbalken erstreckende Messerleiste ergibt, die aus einer Vielzahl von derartigen Abschnitten zusammengesetzt ist. Die Diamantsegmente sind dabei mit ihrer jeweiligen Hartmetallaufnahme auf den jeweiligen Abschnitten aufgelötet. Man erhält auf diese Weise eine hochwertige Schneidkante, bei der der Schneidwerkstoff aus Gründen seiner Verarbeitbarkeit und seines Preises auf den Schneidbereich konzentriert ist, wobei sich durch die Aneinanderreihung der einzelnen Abschnitte in vorteilhafter Weise eine Auswechselbarkeit etwa beschädigter Stellen der Messerleiste ergibt.

Eine im Dauerbetrieb arbeitende Messerleisteist nun nicht nur in ihrem Schneidbereich besonders beansprucht, sondern auch in Bereichen daneben, in denen das zu schneidende Material vor dem Schneidvorgang und danach gegebenenfalls in Berührung kommt. Bei der bekannten Messerleiste ist zwar auch die Möglichkeit vorgesehen, den Abschnitt insgesamt aus Hartmetall auszubilden, abgesehen von der Schneidkante aus polykristallinem Diamantmaterial, jedoch handelt es sich bei dem Abschnitt um einen so engen Bereich, daß unter Berücksichtigung dicht an der Schneidkante angeordneter Befestigungsmittel weite Bereiche des Tragbalkens dem zu schneidenden Material bzw. dem geschnittenen Material ausgesetzt sind. Da für den Tragbalken bei der bekannten Messerleiste kein besonders widerstandsfähiger Werkstoff vorgesehen ist, sind die betreffenden Bereiche des Tragbalkens erheblichen Verschleißerscheinungen ausgesetzt.

Der Erfindung liegt die Aufgabe zugrunde, die eingangs beschriebene Messerleiste dahin gehend zu verbessern, daß der konstruktive Aufwand bei den einzelnen Abschnitten verringert und die Widerstandsfähigkeit der Messerleiste insgesamt gegen Verschleiß erhöht wird. Erfindungsgemäß geschieht dies dadurch, daß jeder Abschnitt im wesentlichen insgesamt aus keramischen Schneidwerkstoff besteht und mit einer in Richtung der Messerleiste verlaufenden Ausnehmung versehen ist, die ausgehend von einer Außenfläche des Abschnitts als Verengung mit einer ins Innere des Abschnitts gerichteten Erweiterung ausgebildet ist, wobei die Ausnehmungen aller Abschnitte miteinander fluchten und einen durchgehenden, sich über mehrere Abschnitte erstreckenden Stab gleicher Abmessung aufnehmen, der mittels die Verengung durchsetzender, in Gewindelöcher des Stabes eindringender Schrauben, die sich an dem Tragbalken abstützen, samt den Abschnitten gegen den Tragbalken ziehbar ist und dem als Sicherung gegen Verdrehung der Abschnitte gegeneinander eine parallel zu ihm verlaufende, die Abschnitte durchsetzende Achse zugeordnet ist.

Die Ausbildung der Abschnitte im wesentlichen insgesamt aus keramischem Schneidwerkstoff bei dessen Erstreckung über die weiteren verschleißempfindlichen Bereiche der Zufuhr und Ableitung des zu schneidenden bzw. geschnittenen Materials ermöglicht eine einfache Herstellung jedes Abschnitts, da diese selbst nicht nachträglich durch Montage und Zusammenfügung zu einem Bauteil zusammengesetzt werden muß. Bei der Herstellung der Abschnitte läßt sich die Ausnehmung zur Aufnahme des durchgehenden Stabes für die Befestigung der Abschnitte am Tragbalken problemlos ermöglichen, da keramische Schneidwerkstoffe in Formen, praktisch beliebig gepreßt werden können, wonach dann durch einen Sinterungsvorgang der keramische Schneidwerkstoff seine Härteeigenschaften erhält. Das Zusammensetzen der Messerleiste aus den einzelnen aus keramischem Schneidwerkstoff bestehenden Abschnitten führt dabei zu dem Vorteil, daß die beim Sintern auftretende Schrumpfung des keramischen Schneidwerkstoffs jeweils auf einen Abschnitt begrenzt bleibt, der hinsichtlich seiner Länge in bezug auf die Länge der Messerleiste ohne weiteres so dimensioniert werden kann, daß die beim Schrumpfen entstehenden Verwerfungen so geringfügig bleiben, daß sie durch einen nach dem Zusammensetzen der Abschnitte zur Messerleiste erfolgenden Schleifvorgang im Bereich der Schneidkante ohne weiteres ausgeglichen werden kann.

Zweckmäßig gestaltet man die Ausnehmung so, daß sie von derjenigen Außenfläche der Abschnitte ausgeht, die sich bei Schneidbelastung als ebene Tragfläche gegenüber einer Stützfläche des Tragbalkens abstützt. Aufgrund dieser Anordnung wird bei Schneidbelastung der Stab zusammen mit der Ausnehmung nicht zusätzlich belastet.

Der Querschnitt der Ausnehmung läßt sich zweckmäßig so gestalten, daß die Ausnehmung in die Verengung über einen Stützabsatz übergeht, der parallel zur Tragfläche verläuft. Der sich hinter diese Stufe setzende Stab drückt dann beim Anziehen der in den Stab einzubringenden Schrauben flach auf die Stufe, ohne daß dabei irgendwelche radial zu den Schrauben verlaufenden Kraftkomponenten entstehen können, so daß der keramische Schneidwerkstoff in dem betreffenden Bereich nur auf Druck beansprucht wird.

Im Falle der Verwendung eines besonders biegefesten keramischen Werkstoffs besteht die Möglichkeit, die Ausnehmung als kreisrunde Bohrung mit kreisabschnittartiger seitlicher, die Verengung bildender Öffnung auszubilden. Diese Gestaltung hat den Vorteil der einfachen Herstellung vor allem des Stabes.

Die Messerleiste läßt sich weiterhin vorteilhaft derart gestalten, daß als Sicherung gegen Verdrehung der Abschnitte gegeneinander parallel zu dem Stab eine die Abschnitte durchsetzende Achse vorgesehen ist. In diesem Falle werden die Abschnitte in ihrer Zusammenstellung von zwei sich längs der Messerleiste über alle Abschnitte erstreckende, stabartige Elemente zusammengefaßt.

Eine feste Verbindung der Abschnitte als vollständige Messerleiste läßt sich vorteilhaft dadurch herstellen, daß die Abschnitte mit dem Stab bzw. der Achse durch Verklebung verbunden sind. Aufgrund der Verklebung ergibt sich eine unlösbare, sehr stabile Verbindung der Abschnitte mit dem Stab und gegebenenfalls auch mit der Achse zu einem starren Gebilde, das dann die Messerleiste bildet. Eine andere Möglichkeit der Verbindung besteht darin, die Abschnitte mit dem Stab bzw. der Achse über dessen bzw. deren Enden durch eine Verschraubung verspannt zu verbinden. Bei dieser Art der Verbindung besteht die Möglichkeit, nachträglich die Abschnitte wieder voneinander zu trennen und somit die Messerleiste zu demontieren, was z.B. für eine Reparatur von Vorteil ist.

Der Messerleiste läßt sich dadurch eine präzise Auflage geben, daß die Tragflächen der Abschnitte mit der Oberfläche des Stabes im Bereich der Verengung eine überschliffene Planfläche bilden. Aufgrund dieser Bearbeitung erhält man eine plan durchgehende Tragfläche, die sich über alle Abschnitte und im betreffenden Teil der Oberfläche des Stabes erstreckt. Dies hat den Vorteil, daß beim Anziehen der in den Stab eindringenden Schrauben der Stab mit dem Teil seiner Oberfläche, der zur Tragfläche gehört, gegen die Stützfläche des Tragbalkens gezogen wird, womit der keramische Schneidwerkstoff von zu hoher Druckbeanspruchung entlastet wird. Es geht dabei jedoch genügend Spannung auf den aus dem keramischen Schneidwerkstoff bestehenden Teil jedes Abschnitts über, da aufgrund der Elastizität des Stabmaterials, insbesondere Stahl, eine gewisse Verformung des Stabes eintritt, die größer ist als diejenige des keramischen Schneidwerkstoffs.

Um die komplette Messerleiste bei ihrer Anbringung am Tragbalken insbesondere in bezug auf ein an ihr vorbeibewegendes Schneidmesser zu justieren, gestaltet man die Messerleiste und den Tragbalken vorteilhaft so, daß die in den Stab eindringenden Schrauben rechtwinklig zum Stab verlaufende Langlöcher im Tragbalken im wesentlichen spielfrei durchsetzen und daß der Stab mit sich in dessen Längsrichtung erstreckenden Schlitzen versehen ist, in die exzentrisch aus einem im Tragbalken gelagerten Drehbolzen herausragende Stifte passen, durch die bei Verdrehung der Drehbolzen der Stab und damit die Abschnitte in Richtung der Langlöcher verschiebbar sind. Diese Art der Justierung ermöglicht es auch, eine häufig im mittleren Abschnitt der Messerleiste besonders stark auftretende Abnutzung der Schneidkante dadurch auszugleichen, daß im Abnutzungsbereich die Messerleiste soweit an das Schneidmesser herangerückt wird, daß der durch die Abnutzung entstandene Spalt ausgeglichen wird. Es hat sich gezeigt, daß trotz derartiger Abnutzung der Schneidkante diese weitgehend schneidfähig bleibt, jedoch der aufgrund der Abnutzung entstehende Spalt zwischen Messerleiste und Schneidmesser zu einer wesentlichen Verringerung der Schneidleistung führt. Insgesamt nimmt dabei die Messerleiste eine leicht gebogene Gestalt an.

Die Messerleiste läßt sich besonders vorteilhaft als Gegenmesser für einen Stranggranulator mit einem Walzenfräser verwenden, wobei dem Gegenmesser Zuführwalzen vorgeordnet sind, von denen die an das Gegenmesser angrenzende Walze mit einem am Gegenmesser angeordneten Abstreifer zusammenwirkt. Derartige Stranggranulatoren sind bekannt. In diesem Falle läßt sich die Achse für die Anbringung des Abstreifers mit verwenden, nämlich dadurch, daß der Abstreifer in einen sich über alle Abschnitte erstreckenden Schlitz eingelassen ist und mittels in die Achse eindringender und den Abstreifer durchsetzender Schrauben an den Abschnitten befestigt ist.

Ausführungsbeispiele der Erfindung sind in den Figuren dargestellt. Es zeigen:
- Fig. 1: die Messerleiste mit einem an ihr vorbeibewegten Schneidmesser in Seitensicht,
- Fig. 2: eine ähnlich gestaltete Messerleiste im Schnitt gemäß der Linie B-B aus Fig. 3, und zwar an einem Stranggranulator,
- Fig. 3: eine perspektivische Darstellung der Messerleiste gemäß Fig. 2 zusammen mit dem zugehörigen (abgesetzt gezeichneten) Tragbalken,
- Fig. 4: einen Schnitt längs der Linie C-C aus Fig. 2.

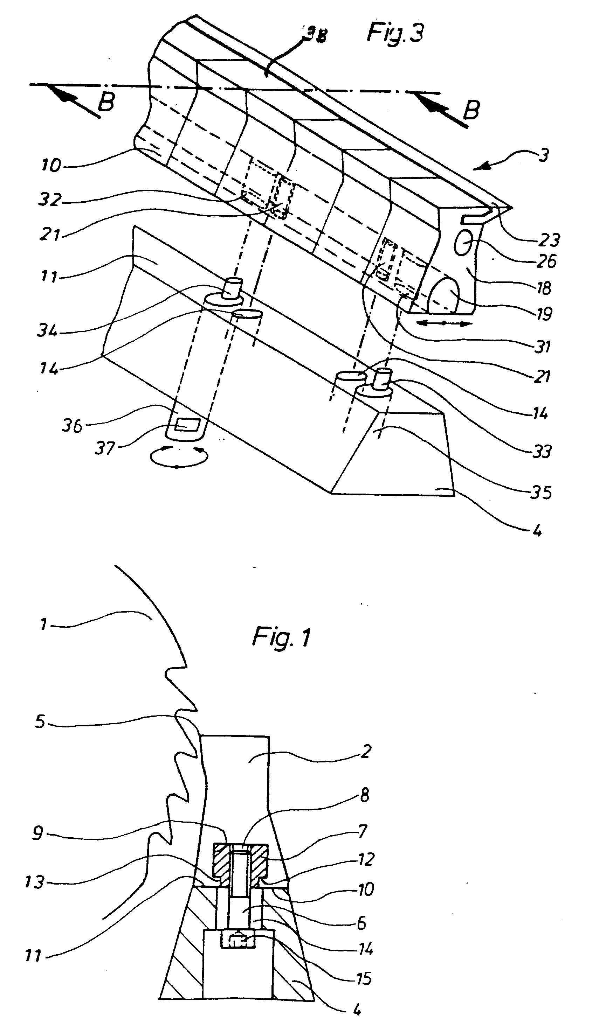

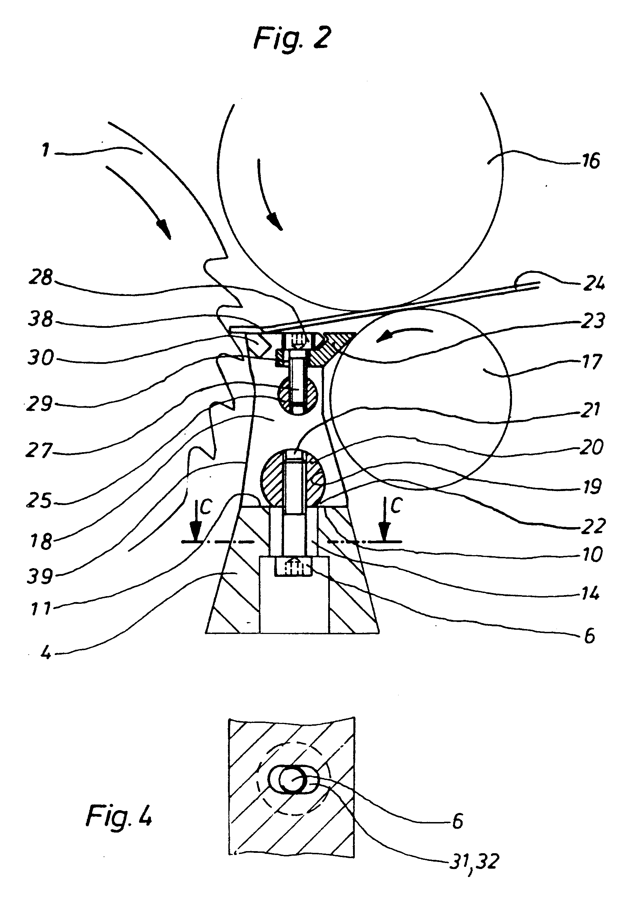

Fig. 1 zeigt das als Messerwalze ausgebildete Schneidmesser 1, das mit der aus den einzelnen Abschnitten 2 aufgebauten Messerleiste zusammenwirkt, die in ihrer Gesamtheit als Messerleiste 3 bezeichnet in der Fig. 3 dargestellt ist. Die einzelnen hintereinander liegenden Abschnitte 2 liegen auf dem Tragbalken 4 auf, der in hier nicht interessierender Weise auf irgendeinem Maschinengestell gelagert sein kann. Der Abschnitt 2 besteht insgesamt aus keramischem Schneidwerkstoff, seine Schneidkante bildet daher in bezug auf das, Schneidmesser 1 ein besonders dauerhaftes Gegenmesser. Dabei ergibt sich aufgrund der Gesamtgestaltung des Abschnitts 2 aus keramischem Schneidwerkstoff über dessen gesamte Außenfläche eine besondere Verschleißfestigkeit in bezug auf zugeführtes, zu schneidendes Material bzw. geschnittenes Material. Die Befestigung der einzelnen Abschnitte 2 an dem Tragbalken 4 erfolgt durch die Schrauben 6, die in einen sich über die aneinander anschließenden Abschnitte 2 erstreckenden Stab 7 eindringen. Der Stab 7 ist zu diesem Zweck mit den Gewindelöchern 8 versehen, er besitzt ein Profil, das in eine entsprechend geformte Ausnehmung satt paßt. Die Ausnehmung 9 ist benachbart zu der Tragfläche 10 des Abschnitts 2 angeordnet, die auf der Stützfläche 11 des Tragbalkens 4 aufliegt (siehe auch Fig. 3). Der Abschnitt 2 stützt sich bei Schneidbelastung gegenüber der Stützfläche 11 des Tragbalkens 4 ab, so daß die durch die Schraube 6 und den Stab 7 gegebene Verbindung zwischen Abschnitt 2 und Tragbalken 4 während des Schneidvorganges einer zusätzlichen Belastung ausgesetzt ist. Diese Verbindung wird dadurch herbeigeführt, daß die Schraube 6 bei ihrem Anziehen den Stab 7 gegen die Stützfläche 11 zieht, wobei auf den Abschnitt 2 über die Stufe 12 sowohl im Stab 7 als auch im Abschnitt 2 ein Zug auf den Abschnitt 2 ausgeübt wird. Die Ausnehmung 9 geht dabei über den Stützabsatz 12 in die Verengung 13 über. Bei dem im Tragbalken 4 dargestellten Durchbruch 14 handelt es sich um ein Langloch, dessen Wirkung im Zusammenhang mit den Fig. 3 und 4 näher erläutert wird. Dieses Langloch wird von der Schraube 6 im wesentlichen spielfrei durchsetzt, so daß sich für den Stab 7 als auch den Kopf 15 der Schraube 6 ausreichende Auflageflächen gegenüber dem Tragbalken 4 ergeben. Der Stützabsatz 12 verläuft parallel zur Tragfläche 10 und damit zur Stützfläche 11, wodurch erreicht wird, daß der Stützabsatz 12 im Abschnitt 2 lediglich auf Druck beansprucht wird.

In der Fig. 2 ist ein Stranggranulator in Seitensicht dargestellt, bestehend aus dem als Messerwalze ausgebildeten Schneidmesser 1, den beiden Zuführwalzen 16 und 17 und der Messerleiste, bestehend aus der Aneinanderreihung der Abschnitte 18. Der Abschnitt 18 stützt sich, wie bei der Anordnung gemäß Fig. 1, auf dem Tragbalken 4 ob.

Der Abschnitt 18 ist hier mit einer gegenüber der Anordnung gemäß Fig. 1 anders gestalteten Ausnehmung versehen, nämlich der kreisrunden Bohrung 19, die von dem zylindrischen Stab 20 satt ausgefüllt wird. Der Stab 20 enthält das Gewindeloch 21, in das die Schraube 6 eingeschraubt ist. Der Stab 20 geht mit seiner der Tragfläche 10 Zugewandten Seite plan in diese Tragfläche 10 über, so daß bei Anziehen der Schraube 6 sich der betreffende Oberflächenteil des Stabes 20 gegen die Stützfläche 11 des Tragbalkens 4 abstützen kann. Aufgrund dieser Lage und Gestaltung des Stabes 20 in der kreisrunden Bohrung 19 wird dafür gesorgt, daß der Stab 20 beim Anziehen der Schraube 6 aufgrund der Elastizität des Materials des Stabes 20, vorzugsweise Stahl, ein Druck auf die Verengung 22 im Abschnitt 18 ausgeübt wird, der dafür sorgt, daß der Abschnitt 18 auch mit seiner Tragfläche 10 gegen die Stützfläche 11 gedrückt wird.

Wie bei Stranggranulatoren üblich, ist die aus der Aneinanderreihung der Abschnitte 18 bestehenden Messerleiste mit den sich über alle Abschnitte erstreckenden Abstreifer 23 versehenen, siehe auch Fig. 3, der dafür sorgt, daß beim Anfahren des Stranggranulators die zunächst mit der Zuführwalze 17 mitlaufenden Stränge 24 der Messerleiste, hier also den aneinandergereihten Abschnitten 18, zugeführt werden. Die auf den Abstreifer 23 wirkende Reibbelastung tritt daher nur kurzzeitig auf, so daß der Abstreifer 23 praktisch keinem Verschleiß unterworfen ist. Er wird daher üblicherweise als Stahlleiste ausgebildet.

Bei der aus den Abschnitten 18 aufgebauten Messerleiste wird nun für die Befestigung des Abstreifers 23 ein weiteres Bauteil verwendet, nämlich die Achse 25, die als zylindrisches Bauteil eine Bohrung gleichen Durchmessers in den Abschnitten 18 durchsetzt. (Diese Bohrung ist in Fig. 3 mit dem Bezugszeichen 26 versehen). Diese Achse stellt eine besondere Sicherung der Aneinanderreihung der Abschnitte 18 gegen Verdrehung dar. Zusammen mit dem Stab 20 ergibt sich damit hinsichtlich Verdrehsicherheit eine hohe Stabilität der betreffenden Messerleiste. In die Achse 25 dringen die Schrauben 27 ein, die sich mit ihrem Kopf 28 den Abstreifer 23 in Richtung auf die Achse 25 drücken. Der Abschnitt 18 ist zur Aufnahme des Abstreifers 23 mit dem Schlitz 29 versehen. Der Abschnitt 18 ist hier weiterhin mit dem Schneideinsatz 30 ausgestattet, der aus besonders hochwertigem keramischem Schneidmaterial besteht und in einen entsprechenden Schlitz in dem Abschnitt 18 eingeklebt ist. Das Anbringen eines solchen besonderen Schneideinsatzes 30 ist häufig aus Kostengründen wünschenswert, da hierdurch mit dem Einsatz 30 derartige Abschnitte 18 kostengünstiger herstellbar sind. Im Betrieb ändert sich jedoch nichts daran, daß der Abschnitt 18 im wesentlichen vollständig aus keramischem Schneidwerkstoff besteht.

In der Fig. 3 sind der Tragbalken 4 und die Messerleiste 3, bestehend aus den Abschnitten 18,in perspektivischer Sicht dargestellt, wobei aus Gründen der Übersichtlichkeit der Darstellung die Messerleiste 3 und Tragbalken 4 voneinander getrennt gezeichnet sind. Wie ersichtlich, enthalten die Abschnitte 18 als Ausnehmung die kreisrunde Bohrung 19, die sich fluchtend über alle Abschnitte 18 erstreckt. Die Bohrungen 19 und 26 sind dabei leer dargestellt. Wie sich aus Fig. 2 ergibt, enthält dann im zusammengebauten Zustand die Bohrung 19 den Stab 20 und die Bohrung 26 die Achse 25.

Anhand der Fig. 3 sei nunmehr dargestellt, wie die Messerleiste 3 gegenüber dem Tragbalken 4 aus Gründen einer Justierung verschoben werden kann. Einzelne Abschnitte 18 der Messerleiste 3, nämlich hier von rechts gesehen der erste und der dritte Abschnitt, sind mit den Langlöchern 31 und 32 versehen, in die die Stifte 33 und 34 passen, die aus den Drehbolzen 35 und 36 herausragen. Die Drehbolzen 35 und 36 sind drehbar im Tragbalken 4 gelagert. Für diese Verdrehung sind an den Drehbolzen 35 und 36 die Schlüsselflächen 37 vorgesehen. Bei Verdrehung der Drehbolzen 35 und 36 gleiten deren Stifte 33 und 34 in den Langlöchern 31 und 32 hin- und her, wobei sich aufgrund der Exzentrizität der Stifte 33 und 34 zu den Drehbolzen 35 und 36 ein Druck auf die betreffenden Abschnitte 18 und damit den betreffenden Teil der Messerleiste 3 ergibt, der quer zur Messerleiste 3 verläuft. Diesem in Querrichtung verlaufenden Druck kann nun die Messerleiste 3 darum folgen, weil die Schrauben 6 gemäß Fig. 1 und 2 die Langlocher 14 in den Tragbalken 4 durchsetzen, welche Langlöcher 14 rechtwinklig zum Stab 7 bzw. 20 verlaufen. Bei gelockerten Schrauben 6 besitzt damit die Messerleiste 3 eine Bewegungsmöglichkeit in Längsrichtung der Langlöcher 14. Wenn also die Drehbolzen 35 und 36 verdreht werden, so können deren Stifte 33 und 34 in die zugehörigen Langlöcher 31 und 32 hin- und hergleiten, sie bewirken dabei jedoch eine Mitnahme der Messerleiste 3, die zu der erwähnten Verschiebung der Messerleiste 3 in Längsrichtung der Langlöcher 14 führt. Nach erfolgter Justierung der Messerleiste 3 werden dann die Schrauben 6 angezogen, womit die Messerleiste 3 an die Stützfläche 11 des Tragbalkens 4 angepreßt wird.

Das Langloch 31 bzw. 32 gemäß Fig. 3 ist in der Schnittdarstellung gemäß Fig. 4 gezeichnet, die einen Schnitt längs der Linie C-C aus Fig. 2 darstellt. Gemäß Fig. 4 ragt in das Langloch 31/32 die Schraube 6 hinein, die praktisch spielfrei in Längsrichtung des Langlochs 31/32 in diesem hin- und hergeführt werden kann.

Der Stab 7 bzw. 20 und die Achse 25 sind in den diese Bauteile aufnehmenden Abschnitten 2 bzw. 18 eingeklebt, wodurch sich eine sehr feste Verbindung der die betreffende Messerleiste bildenden Bauteile ergibt. Nach Herstellung dieser Verbindung wird die betreffende Messerleiste im Bereich ihrer Tragfläche 10 plan überschliffen, wobei der betreffende Stab 7 bzw. 20 auf seiner der Tragfläche 10 zugewandten Seite ebenfalls plan abgeschliffen wird, so daß sich insgesamt eine plane Oberfläche ergibt, die dann von der Stützfläche 11 des Tragbalkens 4 getragen wird.

Wie Fig. 2 zeigt, gleitet der dort eingezeichnete Kunststoffstrang 24 über die Oberseite 38 des Abschnittes 18 hinweg, was im Falle von Dauerbetrieb, wie bei Stranggranulatoren üblich, zu einer erheblichen Reibbelastung der Oberseite 38 führt, der jedoch der keramische Schneidwerkstoff, aus dem der Abschnitt 18 besteht, ohne weiteres standhält. Desweiteren wird der Abschnitt 18 durch Granulat im Bereich der Messerbrust 39 beaufschlagt, das nach Abschneiden am Schneideinsatz 30 gegen die Messerbrust 39 prallt. Auch dieser so entstehenden Reibbelastung kann der aus keramischem Schneidwerkstoff bestehende Abschnitt 18 ohne weiteres standhalten.

## Patentansprüche

1. Messerleiste (3) zum Zusammenwirken mit einem an ihr vorbeibewegten Schneidmesser (1), insbesondere zum Granulieren von Kunststoffsträngen (24), bestehend aus einzelnen aneinandergereihten, gleichartigen Abschnitten (2;18), wobei jeder Abschnitt derart ausgebildet ist, daß er sich über die Bereiche der Zufuhr und der Ableitung des zu schneidenden bzw. geschnittenen Materials erstreckt und wobei die Abschnitte auf Tragbalken (4) befestigt sind und eine durchgehende Schneidkante aus einem verschleißfesten Schneidwerkstoff bilden, **dadurch gekennzeichnet**, daß jeder Abschnitt (2;18) im wesentlichen insgesamt aus keramischen Schneidwerkstoff besteht und mit einer in Richtung der Messerleiste (3) verlaufenden Ausnehmung (9;19) versehen ist, die ausgehend von einer Außenfläche (10) des Abschnitts (2;18) als Verengung (13;22) mit einer ins Innere des Abschnitts (2;18) gerichteten Erweiterung ausgebildet ist, wobei die Ausnehmungen (9;19) aller Abschnitte (2;18) miteinander fluchten und einen durchgehenden, sich über mehrere Abschnitte (2;18) erstreckenden Stab (7;20) gleicher Abmessung aufnehmen, der mittels die Verengung (13;22) durchsetzender, in Gewindelöcher (8;21) des Stabes (7;20) eindringender Schrauben (6), die sich an dem Tragbalken (4) abstutzen, samt den Abschnitten (2;18) gegen den Tragbalken (4) ziehbar ist und dem als Sicherung gegen Verdrehung der Abschnitte (2;18) gegeneinander eine parallel zu ihm verlaufende, die Abschnitte (2;18) durchsetzende Achse (25) zugeordnet ist.

2. Messerleiste nach Anspruch 1, dadurch gekennzeichnet, daß die Ausnehmung (9; 19) von derjenigen Außenfläche der Abschnitte (2; 18) ausgeht, die sich bei Schneidbelastung als ebene Tragfläche (10) gegenüber einer Stützfläche (11) des Tragbalkens (4) abstützt.

3. Messerleiste nach Anspruch 2, dadurch gekennzeichnet, daß die Ausnehmung (9) in die Verengung (13) über einen Stützabsatz (12) übergeht, der parallel zur Tragfläche (10) verläuft.

4. Messerleiste nach Anspruch 1 oder 2, dadurch gekennzeichnet, daß die Ausnehmung als kreisrunde Bohrung (19) mit kreisabschnittartiger seitlicher, die Verengung (12) bildender Öffnung ausgebildet ist.

5. Messerleiste nach einem der vorhergehenden Ansprüche, dadurch gekennzeichnet, daß als Sicherung gegen Verdrehung der Abschnitte (18) gegeneinander parallel zu dem Stab (20) eine die Abschnitte (18) durchsetzende Achse (25) vorgesehen ist.

6. Messerleiste nach einem der vorhergehenden Ansprüche, dadurch gekennzeichnet, daß die Abschnitte (18) mit dem Stab (20) bzw. der Achse (25) durch Verklebung verbunden sind.

7. Messerleiste nach einem der vorhergehenden Ansprüche, dadurch gekennzeichnet, daß die Abschnitte mit dem Stab (20) bzw. der Achse (25) über dessen bzw. deren Enden durch eine Verschraubung verspannt verbunden sind.

8. Messerleiste nach einem der Ansprüche 2 bis 7, dadurch gekennzeichnet, daß die Tragflächen (10) der Abschnitte (2; 18) mit der Oberfläche des Stabes (7; 20) im Bereich der Verengung (13; 22) eine überschliffene Planfläche bilden.

9. Messerleiste nach einem der Ansprüche 5 - 7, dadurch gekennzeichnet, daß die Schrauben (6) rechtwinkelig zum Stab (7; 20) verlaufende Langlöcher (14) im Tragbalken (4) im wesentlichen spielfrei durchsetzen und daß der Stab (7; 20) mit sich in dessen Längsrichtung erstreckenden Schlitzen (31; 32) versehen ist, in die exzentrisch aus einem im Tragbalken (4) gelagerten Drehbolzen (35; 36) herausragende Stifte (33; 34) passen, durch die bei Verdrehung der Drehbolzen (35; 36) der Stab (7; 20) und damit die Abschnitte (2; 18) in Richtung der Langlöcher (14) verschiebbar sind.

## Claims

1. Counter-cutter (3) for cooperating with a cutting blade (1), said cutting blade (1) being moved past said counter-cutter (3), particularly for the granulating of plastic strands (24), consisting of individual, aligned, identical sections (2; 18), each section being formed such that it extends over the areas of feed and delivery of the material to be cut and of the cut material, respectively, with the sections being attached to supporting beams (4) and forming a continuous cutting edge made of a wear-resistant cutting material, characterized in that each section (2; 18) consists basically of a ceramic cutting material and is provided with a cutout (9; 19), said cutout (9; 19) extending in the direction of the counter-cutter (3) and, starting from an outer surface (10) of the section (2; 18), being in the form of a throat (13; 22) with an extension pointing into the interior of the section (2; 18), with the cutouts (9; 19) of all sections (2; 18) being in alignment with one another and accommodating a continuous rod (7; 20) of identical dimension, said rod (7; 20) extending over a plurality of sections (2; 18) and being adapted to be pulled together with the sections (2; 18) against the supporting beam (4) by means of screws (6), said screws (6) penetrating the throat (13; 22), engaging threaded holes (8; 21) in the rod (7; 20) and being supported on the supporting beam (4), with said rod (7; 20) being associated - in order to prevent the sections (2; 18) from turning in relation to one another - with a shaft (25), said shaft (25) extending parallel to said rod (7; 20) and penetrating the sections (2; 18).

2. Counter-cutter according to claim 1, characterized in that the cutout (9; 19) starts at that outside surface of the sections (2; 18) that is supported, under the pressure of cutting, as a flat support face (10) opposite a supporting surface (11) of the supporting beam (4).

3. Counter-cutter according to claim 2, characterized in that the cutout (9) changes into the throat (13) via a supporting step (12), said supporting step (12) extending parallel to the support face (10).

4. Counter-cutter according to claim 1 or 2, characterized in that the cutout is in the form of a circular bore (19) with a circular-segment-like, lateral opening, said opening forming the throat (12).

5. Counter-cutter according to any one of the preceding claims, characterized in that a shaft (25), penetrating the sections (18), is provided parallel to the rod (20) in order to prevent the sections (18) from turning in relation to one another.

6. Counter-cutter according to any one of the preceding claims, characterized in that the sections (18) are connected to the rod (20) or to the shaft (25) by bonding.

7. Counter-cutter according to any one of the preceding claims, characterized in that the sections are connected to the rod (20) or to the shaft (25) by a screwed connection at the end of said rod (20) or shaft (25).

8. Counter-cutter according to any one of claims 2 to 7, characterized in that the support faces (10) of the sections (2; 18), together with the surface of the rod (7; 20), form a smooth planar surface in the region of the throat (13; 22).

9. Counter-cutter according to any one of claims 5 to 7, characterized in that the screws (6) penetrate, with more or less zero play, slots (14) in the supporting beam (4), said slots (14) extending at right angles to the rod (7; 20), and in that the rod (7; 20) is provided with slits (31; 32), said slits (31; 32) extending in the longitudinal direction of said rod (7; 20), with said slits (31; 32) receiving pins (33; 34), said pins (33; 34) projecting eccentrically out of a pivot pin (35; 36), said pivot pin (35; 36) being held in the supporting beam (4), by which pins (33; 34) the rod (7; 20) and thus the sections (2; 18) are displaceable in the direction of the slots (14) when the pivot pins (35; 36) are turned.

## Revendications

1. Barre de contre-lame (3), destinée à coopérer avec une lame de coupe (1) déplacée devant elle, notamment pour la granulation de boudins (24) de matière plastique, et constituée de tronçons individuels identiques juxtaposés (2 ; 18), chaque tronçon étant configuré de telle sorte qu'il s'étend sur la région d'alimentation et d'évacuation du matériau à couper ou coupé, et lesdits tronçons étant fixés sur une poutre porteuse (4) et formant un tranchant continu en matériau coupant résistant à l'usure, **caractérisée** en ce que chaque tronçon (2 ; 18) est réalisé sensiblement totalement en matériau coupant céramique et est doté d'un évidement (9 ; 19), qui s'étend dans la direction de la barre de contre-lame (3) et qui, en partant d'une face extérieure (10) du tronçon (2 ; 18), est réalisé sous la forme d'une partie rétrécie (13 ; 22) suivie d'une partie élargie s'étendant à l'intérieur du tronçon (2 ; 18), les évidements (9 ; 19) de tous les tronçons (2 ; 18) étant mutuellement alignés et recevant un barreau continu (7 ; 20) de mêmes dimensions, qui s'étend sur plusieurs tronçons (2 ; 18) et peut être serré contre la poutre porteuse (4), conjointement avec les tronçons (2 ; 18), au moyen de vis (6) qui traversent la partie rétrécie (13 ; 22), pénètrent dans des trous filetés (8 ; 21) du barreau (7 ; 20) et s'appuient contre la poutre porteuse (4), un axe (25), s'étendant parallèlement audit barreau et traversant les tronçons (2 ; 18), étant associé audit barreau comme sécurité supplémentaire pour empêcher la rotation des tronçons (2 ; 18) les uns par rapport aux autres.

2. Barre de contre-lame selon la revendication 1, **caractérisée** en ce que l'évidement (9 ; 19) part de la face extérieure des tronçons (2 ; 18) qui, lors de la coupe, s'appuie comme face porteuse plane (10) contre une face d'appui (11) de la poutre porteuse (4).

3. Barre de contre-lame selon la revendication 2, **caractérisée** en ce que l'évidement (9) se raccorde à la partie rétrécie (13) par un gradin d'appui (12) qui s'étend parallèlement à la face porteuse (10).

4. Barre de contre-lame selon la revendication 1 ou 2, **caractérisée** en ce que l'évidement est réalisé sous la forme d'un perçage circulaire (19), doté d'une ouverture latérale en forme de segment de cercle qui constitue la partie rétrécie (22).

5. Barre de contre-lame selon l'une quelconque des revendications précédentes, **caractérisée** en ce qu'on a prévu, comme sécurité supplémentaire pour empêcher la rotation des tronçons (18) les uns par rapport aux autres, un axe (25) qui traverse les tronçons (18) parallèlement au barreau (20).

6. Barre de contre-lame selon l'une quelconque des revendications précédentes, **caractérisée** en ce que les tronçons (18) sont assemblés par collage au barreau (20) et a l'axe (25).

7. Barre de contre-lame selon l'une quelconque des revendications précédentes, **caractérisée** en ce que les tronçons sont assemblés au barreau (20) et à l'axe (25) en étant serrés par un assemblage vissé aux extrémités de ces derniers.

8. Barre de contre-lame selon l'une quelconque des revendications 2 à 7, **caractérisée** en ce que les faces porteuses (10) des tronçons (2 ; 18) forment une surface rectifiée plane avec la surface du barreau (7 ; 20) dans la région de la partie rétrécie (13 ; 22).

9. Barre de contre-lame selon l'une quelconque des revendications 5 à 7, **caractérisée** en ce que les vis (6) traversent sensiblement sans jeu des trous oblongs (14), pratiqués dans la poutre porteuse (4) et s'étendant perpendiculairement au barreau (7 ; 20), et en ce que le barreau (7 ; 20) est pourvu de fentes (31 ; 32), qui s'étendent dans sa direction longitudinale et dans lesquelles s'adaptent des pointes (33 ; 34) dépassant excentriquement d'un pivot (35 ; 36) monté dans la poutre porteuse (4), ces pointes permettant, en faisant tourner le pivot (35 ; 36), de décaler le barreau (7 ; 20) et donc les tronçons (2 ; 18) dans la direction des trous oblongs (14).
